Europäisches Patentamt

**European Patent Office**

**Office européen des brevets**

(11) Veröffentlichungsnummer: **0 276 515**
**A1**

(12) **EUROPÄISCHE PATENTANMELDUNG**

(21) Anmeldenummer: **87202621.6**

(22) Anmeldetag: **28.12.87**

(51) Int. Cl.4: **A01G 9/02**

(30) Priorität: **30.12.86 DE 3644715**

(43) Veröffentlichungstag der Anmeldung:
**03.08.88 Patentblatt 88/31**

(84) Benannte Vertragsstaaten:
**AT CH DE IT LI NL**

(71) Anmelder: **Ter Horst Hydrokultuur**
**Strootbeekweg 145**
**NL-7548 RE Enschede(NL)**

(72) Erfinder: **Ter Horst, Jan**
**Strootbeekweg 145**
**NL-7548 RE Enschede(NL)**

(74) Vertreter: **Kradolfer, Theodorus Albertus**
**Clemens, Drs.**
**Sparrenlaan 9**
**NL-7642 VD Wierden(NL)**

(54) **Pflanzenkübel.**

(57) Ein Pflanzenkübel umfasst ein oder mehrere rohrförmige Profilstücke (3), von denen zumindest ein Profilstück (3) mit einem oder mehreren in einem Wandteil (5) desselben angebrachten fensterförmigen Ausschnitten (4) versehen ist.

Fig. 1A

## Pflanzenkübel

Die Erfindung bezieht sich auf einen Pflanzenkübel.

Pflanzenkübel gibt es in allerlei Ausführungsformen, für deren Herstellung unterschiedliche Produktionsmethoden entwickelt wurden, die u.a. vom jeweils gewählten Ausgangsmaterial abhängig sind.

Diese Pflanzenkübel haben miteinander gemein, daß deren Ausführungsform bereits bei der Herstellung festliegt und keine Änderung nach eigenem Geschmack bzw. den örtlichen Gegebenheiten zuläßt, was allgemein als Nachteil dieser Pflanzenkübel gilt. Weiterhin ergibt sich der Nachteil - namentlich bei den Pflanzenkübeln mit etwas größeren Abmessungen - von hohen Produktionskosten.

Der der Erfindung zugrundegelegte Gedanke bezweckt für diesen Nachteil eine vorteilhafte Lösung zu schaffen. Ausgangspunkt hierbei ist die Verwendung eines gegen niedrige Produktionskosten herstellbaren Basiselementes, das sich wie kein anderes für das auf einfache Weise Anbringen von für die Pflanzen benötigten Einrichtungen eignet.

Erfindungsgemäß umfaßt dieser Pflanzenkübel ein oder mehrere rohrförmige Profilstücke, von denen zumindest ein Profilstück mit einem oder mehreren in einem Wandteil desselben angebrachten, fensterförmigen Ausschnitten versehen ist.

Die der Erfindung zugrundeliegenden verbesserten Ausführungsformen eines Pflanzenkübels sind nachstehend anhand der Zeichnung näher erläutert. Es zeigen:

Fig. 1A und 1B die Basisausführung eines solchen Pflanzenkübels und

Fig. 2 bis 4 beispielhafte Zusammenstellungen von Profilstücken nach Fig. 1 zum Aufbau unterschiedlicher Pflanzenkübel.

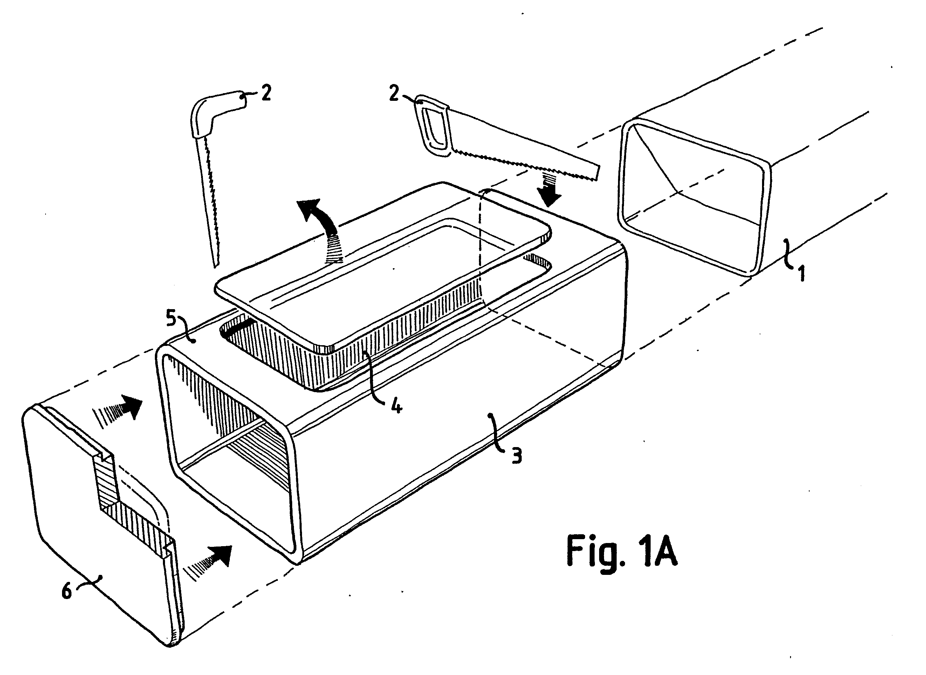

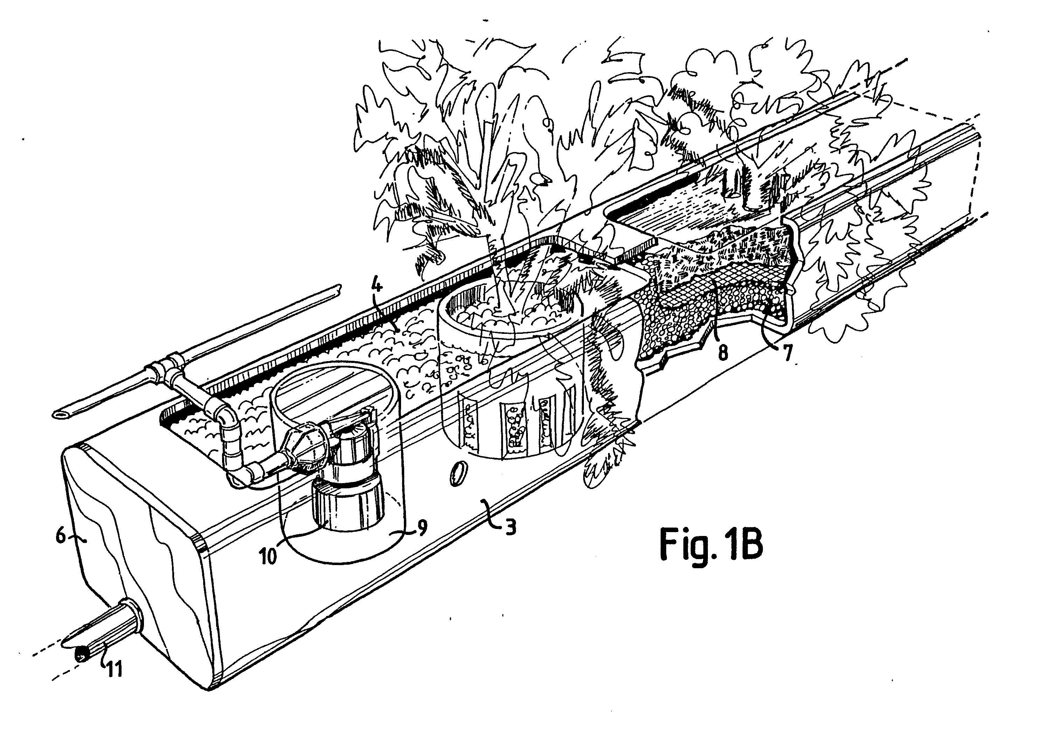

In Fig. 1 ist die Basisausführung eines Pflanzenkübels dargestellt, für den ein rohrförmiges Profilstück 3 zur Anwendung gelangt. Obwohl diese Figur ein rohrförmiges Profilstück 3 mit rechteckigem Querschnitt zeigt, ist es ebenfalls möglich, ein solches Profilstück mit einem anderen Querschnitt, z.B. einem sechseckigen Querschnitt, herzustellen. Weiterhin ist die Herstellung eines Profilstückes mit einer bestimmten Querschnittsform in qua Querschnitt beliebiger Abmessung auf einfache Weise möglich.

Obwohl ein solches Profilstück aus verschiedenen Materialien hergestellt werden kann, wird ein sehr vorteilhaftes Profilstück erhalten, indem dasselbe aus Polyvinylchlorid-Kunststoff hergestellt wird, da ein solches Profilstück auf kostengünstige Weise in großen Längen hergestellt werden kann, und sich auf leichte und einfache Weise mit beispielsweise einer Säge 2 bearbeiten läßt.

Von einem Profilrohr 1 mit gewünschtem Querschnitt und ausreichender Länge wird von dem Anwender ein Stück 3 in der gewünschten Länge abgesägt. Anschließend werden aus einem Wandteil des Profilstücks 3 ein oder mehrere fensterförmige Ausschnitte 4 ausgeschnitten. Nachdem die beiden Enden des Profilstückes mit Abschlußmitteln 6 versehen worden sind, kann der auf diese Weise erhaltene Pflanzenkübel mit Material gefüllt werden, in das die Pflanzen eingesetzt werden können. Die Abschlußmittel 6 dichten das Profilstück 3 endseitig ab.

Obwohl dieses Material aus Topferde bestehen kann, ist hierfür genauso gut expandiertes Tongranulat 7 (4-8 mm Querschnitt) oder eine durch eine Fliesmatte 8 getrennte Kombination aus beiden geeignet.

Von Hand oder mit Hilfe eines automatischen Regelsystems kann dann eine Bewässerung mit dosierter Pflanzennahrungsmittelzufuhr realisiert werden.

Wie in Fig. 1B dargestellt, kann ein solches Regelsystem ein an die Flüssigkeitszufuhrleitung angeschlossenes Schwimmergehäuse 9 mit einem herkömmlichen Schwimmerventil 10 umfassen.

Über Öffnungen an der Unterseite des Schwimmergehäuses 9 kann die Flüssigkeit zu den Pflanzen abfließen und das Schwimmerventil 10 sorgt dafür, daß beim Erreichen eines bestimmten Flüssigkeitsniveaus die Flüssigkeitszufuhr unterbrochen wird.

Indem zwischen zwei oder mehreren Pflanzenkübeln eine Rohrverbindung 11 aufgenommen wird, ist es möglich, die Bewässerung einer Kombination von auf diese Weise miteinander verbundenen Pflanzenkübeln mittels eines einzigen Regelsystems zu realisieren.

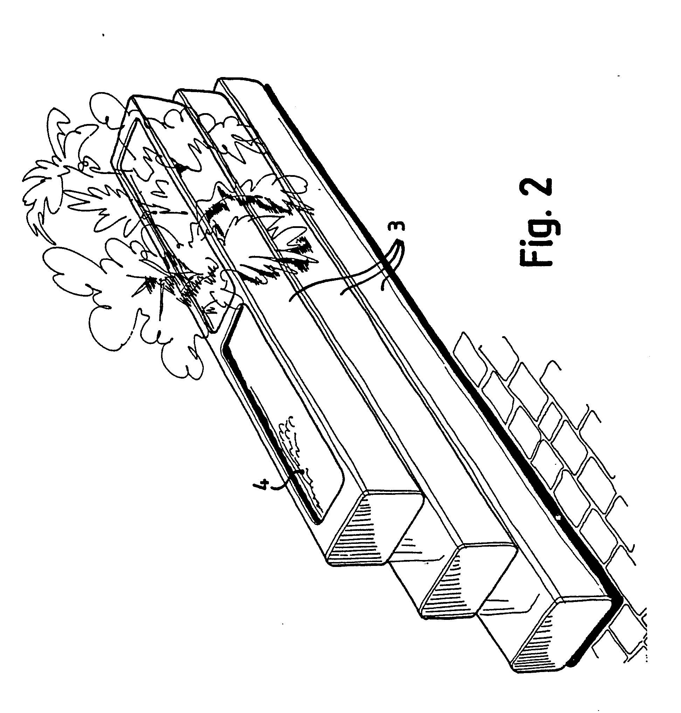

Die Profilstücke lassen sich ebenfalls in Stapelform kombinieren, wie in Fig. 2 dargestellt ist.

Dabei ist das obere Profilstück mit einem oder mehreren in einem Wandteil desselben angebrachten, fensterförmigen Ausschnitten versehen.

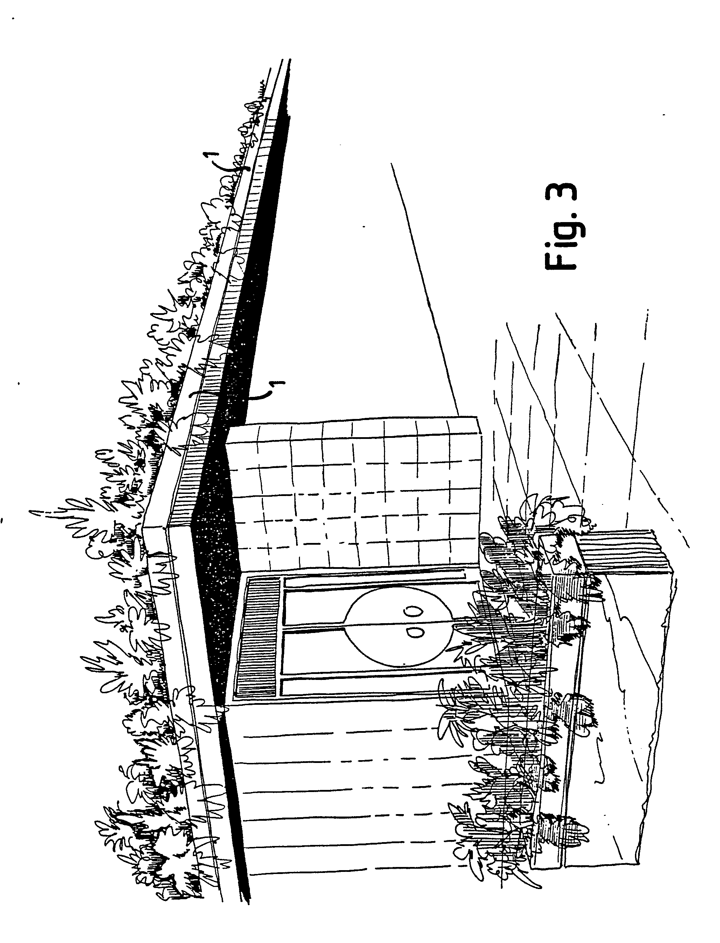

Weiterhin ist es möglich, kurze Pflanzenkübel in Längsrichtung unter Verwendung von Verbindungsstücken zu einem Pflanzenkübel großer Länge zu kombinieren, wie in Fig. 3 dargestellt.

Ein solches Verbindungsstück kann beispielsweise aus einem ähnlich geformten Profilstück mit zweckmäßig reduzierten Abmessungen bestehen, so daß ein lückenloser Anschluß zwischen den miteinander zu verbindenden Pflanzenkübeln gewährleistet ist.

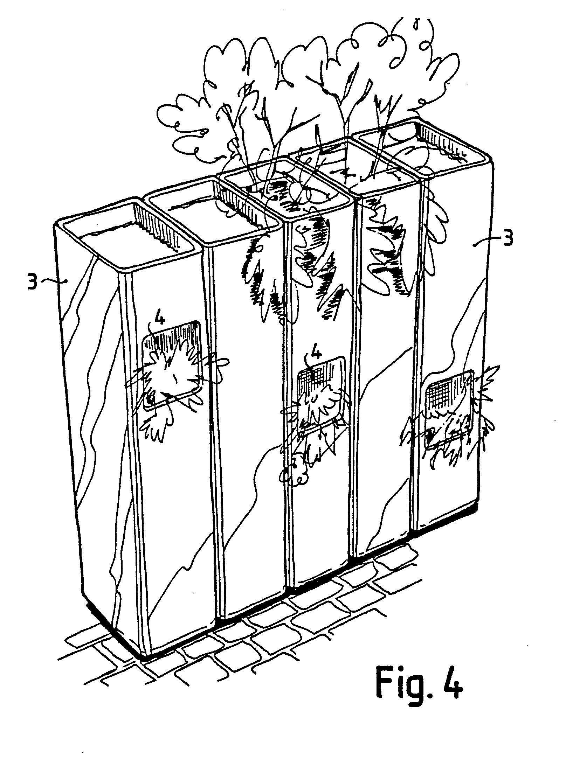

Wie Fig. 4 zeigt, können die Profilstücke ebenfalls hochkant miteinander kombiniert werden, wobei die Bepflanzung eines oder mehrerer fensterförmiger Ausschnitte mit beispielsweise Hängepflanzen möglich ist.

Anstelle eines Zusammenbaus mehrerer Profilstücke in Längsrichtung können die Profilstücke ebenfalls unter beliebigen Winkeln miteinander verbunden werden.

## Ansprüche

1. Pflanzenkübel, dadurch gekennzeichnet, daß der Kübel ein oder mehrere rohrförmige Profilstücke (3) umfaßt, von denen zumindest ein Profilstück (3) mit einem oder mehreren in einem Wandteil (5) dessselben angebrachten, fensterförmigen Ausschnitten (4) versehen ist.

2. Pflanzenkübel nach Anspruch 1, dadurch gekennzeichnet, daß mehrere Profilstücke (3) in Stapelform miteinander verbunden sind.

3. Pflanzenkübel nach Anspruch 1, dadurch gekennzeichnet, daß mehrere Profilstücke (3) in Längsrichtung unter Verwendung von ähnlich profilierten Verbindungsstücken miteinander verbunden sind.

4. Pflanzenkübel nach Anspruch 1, dadurch gekennzeichnet, daß das Profilstück (3) an wenigstens einer seiner Stirnseiten mit Abschlußmitteln abgedichtet verschlossen ist.

5. Pflanzenkübel nach Anspruch 1, dadurch gekennzeichnet, daß das Profilstück (3) einen eckigen Querschnitt aufweist.

6. Pflanzenkübel nach Anspruch 5, dadurch gekennzeichnet, daß das Profilstück (3) einen rechteckigen Querschnitt aufweist.

Fig. 1A

Fig. 1B

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | WO-A-8 102 087 (RAYNER)<br>* Seite 3, Zeilen 13-24; Seite 4, Zeilen 4-6; Ansprüche 1-5; Figuren 1,6 *<br><br>--- | 1-6 | A 01 G 9/02 |
| Y | US-A-4 209 945 (DENT)<br>* Spalte 2, Zeile 57 - Spalte 3, Zeile 31, Figuren 1-4 *<br><br>--- | 1,3-6 | |
| Y | FR-A-2 576 747 (MARGUET)<br>* Zusammenfassung; Figur 6 *<br><br>--- | 2 | |
| A | FR-A-2 375 818 (DE CAMPOS)<br>* Seite 2, Zeile 1 - Seite 3, Zeile 6; Figuren 1-3 *<br><br>--- | 1,4-6 | |
| A | US-A-4 211 034 (PIESNER)<br>* Spalte 2, Zeilen 25-39; Figur 1 *<br>----- | 1,3,4 | |

| RECHERCHIERTE SACHGEBIETE (Int. Cl.4) |
|---|
| A 01 G |

Der vorliegende Recherchenbericht wurde für alle Patentansprüche erstellt

| Recherchenort | Abschlußdatum der Recherche | Prüfer |
|---|---|---|
| DEN HAAG | 14-04-1988 | HERYGERS J.J. |